# DEMANDE DE BREVET EUROPEEN

(11) **EP 4 667 420 A1**
(43) Date de publication de la demande: **24.12.2025**
(21) Numéro de dépôt: 25183601.1
(22) Date de dépôt: 18.06.2025
(51) Int. Cl.: C02F 1/00, C02F 1/28, C02F 1/66, C02F 1/68

(54) **DISPOSITIF DE TRAITEMENT DE CALCAIRE PRÉSENT DANS DE L'EAU POTABLE**

(30) Priorité: 20.06.2024 FR 2406614
(71) Demandeur: Pioch, Bruno, 34480 Magalas (FR)
(72) Inventeur: Pioch, Bruno, 34480 Magalas (FR)
(74) Mandataire: Rhein, Alain

(57) **Abrégé**

L'invention concerne un dispositif (100) de traitement de calcaire présent dans de l'eau potable, comprenant :
- une unité de contrôle (104),
- un débitmètre (106),
- un module d'injection (108) de CO2,
- une électrovanne (110) étant actionnable par l'unité de contrôle (104) de sorte à contrôler :
• une fréquence d'injection de CO2, indexée sur ledit débit mesuré, et
• une durée d'injection de CO2,

- un filtre mélangeur (112) comprenant :
• au moins un média filtrant pour filtrer d'éventuelles particules présentes dans l'eau, et
• au moins un élément mélangeur pour améliorer la dilution de CO2 injecté dans l'eau,

- une sonde (114) électronique de mesure de PH,
dans lequel, l'unité de contrôle (104) est prévue pour modifier ladite fréquence d'injection et/ou ladite durée d'injection en fonction dudit PH mesuré et d'une valeur de PH, dit PH cible, déterminée en fonction d'un PH de l'eau précédemment mesuré sans injection de CO2, dit PH initial.

L'invention concerne encore un procédé de traitement de calcaire présent dans de l'eau potable.

## Description

La présente invention concerne un dispositif de traitement de calcaire présent dans de l'eau potable. L'invention porte encore sur un procédé de mise en oeuvre d'un tel dispositif.

La présente invention s'applique au domaine de traitement de calcaire dans de l'eau.

### Etat de la technique

On connait de nombreux dispositifs permettant de réduire le niveau de calcaire dans de l'eau potable provenant d'un réseau de distribution. De manière générale, il existe trois approches utilisées par les solutions de l'art.

Une première approche, consiste à filtrer l'eau calcaire, par exemple en utilisant un système de filtration d'eau par osmose inverse. Cette approche réduit efficacement le niveau de calcaire présent dans l'eau, mais présente l'inconvénient d'aussi filtrer les autres minéraux et oligoéléments présents dans l'eau, responsable en partie du gout de l'eau et présentant des bienfaits pour la santé.

Une deuxième approche, utilisée par les adoucisseurs à eau de type sel, consiste en la captation des ions de calcium et des ions de magnésium présent dans l'eau. Cette approche réduit efficacement le niveau de calcaire présent dans l'eau, mais présente l'inconvénient de nécessiter une phase de régénération consommant une grande quantité d'eau et de sel. L'eau ainsi utilisée est impropre à la consommation et est donc généralement envoyé directement à l'égout.

Une troisième approche consiste à injecter du CO2 dans de l'eau potable afin de transformer le carbonate de calcium présent dans l'eau en bicarbonate de calcium. Cette approche réduit efficacement le niveau de calcaire sans filtrer les autres minéraux et ne génère pas d'eau impropre à la consommation. Cependant, les dispositifs de l'art traitant le calcaire par injection de CO2 dans l'eau sont difficiles à paramétrer.

De plus, les dispositifs de l'art injectant du CO2 ne sont pas capables de s'adapter aux fluctuations de la qualité de l'eau provenant d'un réseau de distribution. Ainsi, lorsque le niveau de calcaire présent dans l'eau augmente, la quantité de CO2 injecté reste constante et le la proportion de carbonate de calcium qui n'est pas transformé augmente. Inversement, lorsque le niveau de calcaire présent dans l'eau diminue, la quantité de CO2 injecté restant constante, trop de CO2 est consommé inutilement par le dispositif.

Un but de la présente invention est de proposer un dispositif pour remédier à au moins un des inconvénients précités.

Un autre but de la présente invention est de proposer un dispositif de traitement de calcaire présent dans de l'eau potable plus précis, plus économique, plus écologique, plus facile à paramétrer et capable de s'adapter à des fluctuations du niveau de calcaire l'eau.

### Exposé de l'invention

L'invention permet d'atteindre au moins un de ces buts par un dispositif de traitement de calcaire présent dans de l'eau potable, comprenant :
- une unité de contrôle,
- un débitmètre électronique pour mesurer un débit dans une conduite d'eau potable et transmettre ledit débit mesuré à ladite unité de contrôle,
- un module d'injection de CO2 dans ladite conduite d'eau en aval dudit débitmètre,
- une électrovanne prévue pour être disposée entre ledit module d'injection et une source de CO2, ladite électrovanne étant actionnable par l'unité de contrôle de sorte à contrôler :
   - une fréquence d'injection de CO2, indexée sur ledit débit mesuré, et/ou
   - une durée d'injection de CO2,
- un filtre à eau, dit filtre mélangeur, prévu pour être disposé en aval dudit module d'injection de CO2 et comprenant :
   - au moins un média filtrant pour filtrer d'éventuelles particules présentes dans l'eau, et
   - au moins un élément mélangeur pour améliorer la dilution de CO2 injecté dans l'eau,
- une sonde électronique de mesure de PH pour mesurer le PH de l'eau en aval dudit filtre mélangeur et transmettre ladite mesure à l'unité de contrôle,
dans lequel, l'unité de contrôle est prévue pour modifier ladite fréquence d'injection et/ou ladite durée d'injection en fonction dudit PH mesuré et d'une valeur de PH, dit PH cible, déterminée en fonction d'un PH de l'eau précédemment mesuré sans injection de CO2, dit PH initial.

Le dispositif selon l'invention propose ainsi un dispositif plus précis, plus économique et plus écologique.

En effet, l'utilisation d'un filtre mélangeur permet d'améliorer le mélange du flux d'eau potable avec le CO2 injecté. L'utilisation combinée d'au moins un média filtrant et d'au moins un élément mélangeur compris dans un filtre mélangeur permet d'augmenter d'avantage le mélange du CO2 dans l'eau potable qu'une solution où un filtre média filtrant et un élément mélangeur sont disposés indépendamment l'un de l'autre sur une conduite d'eau. Le CO2 mélangé est dilué dans l'eau et se transforme en acide carbonique, ce qui impact le PH de l'eau.

Le filtre mélangeur permet ainsi d'obtenir d'une manière fiable et homogène la dilution du CO2 injecté dans l'eau. Par conséquent, une sonde de mesure PH disposée en aval du filtre mélangeur permet d'obtenir une mesure du PH fiable, reproductible et représentative du PH de l'eau circulant en aval du dispositif. Ainsi, il n'est pas nécessaire de stocker l'eau dans lequel le CO2 a été injecté avant de mesurer le PH pour obtenir une mesure de PH représentative. Il n'est pas non plus nécessaire de faire recirculer l'eau au travers du dispositif pour obtenir une mesure de PH représentative.

Les fournisseurs d'eau potable ont une obligation légale d'alimenter leurs réseaux de distribution en eau à un équilibre calco-carbonique, c'est-à-dire une eau en un état d'équilibre chimique dans lequel les concentrations en dioxyde de carbone, hydrogénocarbonate et carbonate ne varient pas en présence de carbonate de calcium.

Réduire le PH d'une eau en équilibre calco-carbonique permet de facilité la transformation du carbonate de calcium en bicarbonate. Toutefois, lorsque le niveau est trop bas, l'eau peut endommager les canalisations en aval du dispositif.

Le dispositif selon l'invention étant capable de mesurer le PH de manière fiable et représentatif de l'eau circulant en aval, celui-ci peut être paramétré de manière plus précise, de sorte à n'injecter que la quantité de CO2 requise pour le traitement du calcaire. Par conséquent, le dispositif selon l'invention est plus économique et plus écologique que les solutions de l'art.

Par ailleurs, le dispositif est capable de réduire le PH uniquement avec l'injection de CO2. Autrement dit, contrairement à des solutions de traitement du PH d'eau non potable, équipant par exemple des piscines ou des fontaines, le dispositif ne nécessite pas l'injection d'une solution acide, tel que de l'acide acide chlorhydrique, pour réduire le PH de l'eau.

De plus, le dispositif selon l'invention propose un dispositif plus simple à paramétrer que les solutions de l'art. En effet, comme l'impact d'une modification de la fréquence d'injection et/ou la durée d'injection de CO2 peut être quantifiée en temps réel par la mesure du PH par la sonde, il est plus simple d'identifier :
- une fréquence d'injection optimale pour une durée d'injection donnée,
- une durée d'injection optimale pour une fréquence d'injection donnée ; et/ou
- une paire fréquence d'injection et durée d'injection optimale.

Par ailleurs, lorsque le niveau de calcaire dans de l'eau provenant d'un réseau de distribution change, qu'il augmente ou qu'il diminue, le PH de l'eau change en conséquence, respectivement celui-ci augmente ou diminue. Le dispositif selon l'invention est capable de détecter ces changements de PH et de modifier la fréquence d'injection et/ou la durée d'injection en fonction. Ainsi, le dispositif est capable de s'adapter à des fluctuations du niveau de calcaire l'eau.

Avantageusement, la durée d'injection peut être indexée sur ledit débit mesuré. Ainsi, lorsque le débit mesuré diminue ou augmente, la durée d'injection peut être respectivement réduite ou augmentée en conséquence. Selon un mode de réalisation, la durée d'injection peut être proportionnelle audit débit. Selon un autre mode de réalisation, la durée d'injection peut être définie pour différentes plages de valeur de débit. Autrement dit la durée d'injection est modifiée lorsque des valeurs seuilles de débit mesuré sont atteinte.

Par ailleurs, le PH cible est déterminé en fonction d'un PH initial, mesuré sans injection de CO2. Ainsi, le dispositif vise à réduire le PH de l'eau potable par rapport au PH initialement mesuré de l'eau en équilibre calco-carbonique. Autrement dit, les injections de CO2 sont réalisée quel que soit le PH initial mesuré.

Avantageusement, la valeur du PH cible est inférieure de 0.4 à 0.6 à la valeur du PH initial, préférentiellement inférieur de 0.5.

Ainsi, le dispositif peut réduire efficacement le niveau de calcaire présent dans l'eau sans risquer d'atteindre un PH de l'eau trop bas pouvant endommager les canalisations en aval du dispositif.

En effet, de manière surprenante, il a été identifié lors de tests que dans une majorité des situations testées, abaissé le PH d'une eau de 0.4 à 0.6 depuis la valeur du PH initial, préférentiellement l'abaissé de 0.5, permettais de réduire par dissolution le calcaire présent dans l'eau et ce quel que soit la valeur du PH initial.

Avantageusement l'unité de contrôle peut :
- augmenter la fréquence d'injection et/ou la durée d'injection de CO2 lorsque le PH mesuré est inférieure audit PH cible ; et
- réduire la fréquence d'injection et/ou la durée d'injection de CO2 lorsque le PH mesuré est supérieur audit PH cible.

Ainsi, le dispositif est capable de se paramétrer de manière automatique. De plus, le dispositif est aussi capable de s'adapter à des fluctuations du niveau de calcaire dans l'eau.

En effet, chaque nouvelle mesure du PH effectuée par la sonde est comparée au PH cible de sorte à valider ou adapter les paramètres d'injections du dispositif (fréquence d'injection et/ou durée d'injection). A titre, d'exemple nullement limitatif les paramètres d'injections peuvent être validés et conservés lorsque le PH mesuré est égal au PH cible à plus ou moins 0,1.De plus, le dispositif est aussi capable de s'adapter à différentes pressions statiques de l'eau dans la conduite d'eau sur lequel il est installé. Le dispositif est en outre capable de s'adapter à une fluctuation de la pression de la source de CO2. Pour une fréquence et une durée d'injection donnée, la quantité de CO2 injecté change si la différence de pression entre le CO2 et la pression statique dans la conduite d'eau change. Un tel changement de la quantité de CO2 injecté impact bien évidement la valeur du PH mesuré et peut être compensée en adaptant les paramètres d'injections du dispositif.

Avantageusement, une fréquence d'injection initiale peut être préconfigurée dans l'unité de contrôle, la fréquence initiale pouvant être préconfigurée de sorte à réaliser un nombre d'injection de CO2 par litre d'eau compris entre 8 et 12, préférentiellement égal à 10.

Ainsi, le dispositif peut être paramétré plus rapidement lors de son installation. En effet, de manière surprenante, il a été identifié lors de tests que dans une majorité des situations testées, le nombre optimal d'injection de CO2 par litres d'eau est compris entre 8 et 12. Ainsi, en partant d'une fréquence initiale préconfigurée de sorte à réaliser un nombre d'injection de CO2 par litre d'eau compris entre 8 et 12, le nombre d'itérations requises avant d'identifier la fréquence d'injection de CO2 optimale est réduit.

Pour rappel, la fréquence d'injection est indexée sur le débit mesuré. Autrement dit, la fréquence d'injection (en nombre d'injections par secondes) est égale au débit mesuré (en litres par seconde) multiplié par un coefficient, dit coefficient d'injection (en nombre d'injections par litre).

Ainsi, lorsqu'une fréquence d'injection est modifiée ou configurée de sorte à réaliser un nombre N d'injections de CO2 par litre, par exemple dix, le coefficient d'injection est égal à N, donc dix dans cet exemple. Si dans ce même exemple, le débit mesuré est de deux litres par secondes, la fréquence d'injection serait donc égale à vingt injections par seconde.

Avantageusement, au moins une durée initiale d'injection peut être préconfigurée dans l'unité de contrôle, ladite au moins une durée initiale d'injection pouvant être comprise entre 6 et 110 millisecondes.

Ainsi, le dispositif peut être paramétré plus rapidement lors de son installation. En effet, de manière surprenante, il a été identifié lors de tests que dans une majorité des situations testés, la durée optimum d'injection de CO2 est comprise entre 6 et 100 millisecondes. Ainsi, en partant d'une durée initiale comprise entre 6 et 100 millisecondes, le nombre d'itérations requises avant d'identifier la durée optimale d'injection de CO2 est réduit.

Avantageusement, une pluralité de durées initiales d'injection, chacune associée à une valeur de PH distincte, peuvent être préconfigurées dans l'unité de contrôle, dans lequel une desdites durées initiales d'injection peut être choisie par l'unité de contrôle en fonction de la valeur de PH associée et de la valeur du PH initial.

Ainsi, le dispositif peut être paramétré encore plus rapidement lors de son installation. En effet, la durée d'injection optimale est particulièrement impactée par la valeur du PH initial. En identifiant la durée d'injection initial dont la valeur PH associée est la plus proche du PH initial, le nombre d'itérations requises avant d'identifier la durée optimale d'injection de CO2 est réduit.

Alternativement, une pluralité de fréquences initiales d'injection, chacune associée à une valeur de PH distincte, peuvent être préconfigurées dans l'unité de contrôle, dans lequel une desdites fréquence initiale d'injection peut être choisie par l'unité de contrôle en fonction de la valeur de PH associée et la valeur du PH initial.

Selon une autre alternative, une pluralité de paires de fréquence d'injection et durée d'injection initiales, chaque paire associée à une valeur de PH distincte, peuvent être préconfigurées dans l'unité de contrôle, dans lequel une desdites fréquence initiale d'injection peut être choisie par l'unité de contrôle en fonction de la valeur de PH associée et la valeur du PH initial.

Avantageusement, la fréquence d'injection peut être préconfiguré dans l'unité de contrôle comme modifiable de sorte à réaliser un nombre d'injection de CO2 par litre d'eau compris entre 5 et 15.

Ainsi, lors du paramétrage du dispositif ou lors d'une modification de la fréquence d'injection en fonction du PH mesuré et du PH cible, la plage de fréquences d'injection possible est limitée. Cela permet de garantir que la fréquence d'injection ne sera pas modifiée hors d'une plage fonctionnelle.

En effet, si la fréquence d'injection est trop élevée, la durée d'injection voulue risque de ne pas pouvoir être respectée. D'autre part, si la fréquence d'injection est trop basse, la durée d'injection risque d'être augmenté pour obtenir une paire fréquence d'injection et durée d'injection optimale. Or, lorsque la durée d'injection est trop longue il est plus difficile de diluer l'intégralité du CO2 injecté dans l'eau.

Avantageusement, la durée d'injection peut être préconfigurée dans l'unité de contrôle comme modifiable entre 4 et 300 millisecondes.

Ainsi, lors du paramétrage du dispositif ou lors d'une modification de la durée d'injection en fonction du PH mesuré et du PH cible, la plage de durée d'injection possible est limitée. Cela permet de garantir que la durée d'injection ne sera pas modifiée hors d'une plage fonctionnelle.

En effet, une durée d'injection supérieure à 300 millisecondes encourt le risque que l'intégralité du CO2 injecté ne soit pas diluée dans l'eau. De plus, si la durée d'injection est inférieure à 4 millisecondes, la fréquence d'injection risque de devoir être augmentée drastiquement.

Avantageusement, le module d'injection peut comprendre un moyen anti-retour pour permettre le passage du CO2 dans un premier sens et empêcher le passage de l'eau dans le sens inverse.

Avantageusement, au moins un élément mélangeur peut être une hélice mélangeuse de forme hélicoïdale prévue pour être disposée co-axialement dans un élément cylindrique du filtre mélangeur traversé par l'eau potable.

Ainsi, l'élément mélangeur permet d'augmenter les turbulences dans le flux d'eau et de CO2 traversant le filtre mélangeur. Cela permet de mélanger d'avantage le CO2 dans l'eau et améliore sa dissolution.

A titre d'exemple nullement limitatif, l'élément cylindrique du filtre mélangeur peut être le centre creux d'un média filtrant tubulaire creux.

Alternativement, l'élément cylindrique du filtre mélangeur peut-être un tube traversé par le flux d'eau et de CO2.

Alternativement ou en plus, au moins un élément mélangeur peut être une hélice mélangeuse peut comprenant une pluralité de tronçons hélicoïdaux, chaque tronçon étant décalé du précédent tronçon d'un angle compris entre 45° et 135°, de préférence compris entre 80° et 100°.

Ainsi, l'élément mélangeur n'a pas la forme d'une hélicoïde continue mais la forme d'une pluralité d'hélicoïdes disposées bout à bout, avec chaque hélicoïde décalée de la ou des hélicoïdes adjacentes d'un angle compris entre 45° et 135°, de préférence compris entre 80° et 100°, autour d'un axe central et longitudinal de l'élément mélangeur. Cela permet d'augmenter d'avantage les turbulences dans le flux d'eau et de CO2 traversant le filtre mélangeur. Cela permet de mélanger d'avantage le CO2 dans l'eau et améliore ainsi sa dissolution et donc sa transformation en acide carbonique.

Selon un mode de réalisation, chaque tronçon hélicoïdal est identique. Alternativement, le sens de rotation de chaque tronçon hélicoïdal autour d'un axe central et longitudinal de l'élément mélangeur est opposée au sens de rotation des tronçons adjacents.

Selon un mode de réalisation nullement limitatif, le nombre de tronçons peut être compris entre 4 et 8.

Selon un autre aspect de l'invention, il est proposé un procédé de traitement de calcaire présent dans de l'eau potable, comprenant au moins une itération des étapes suivante :
- mesure par un débitmètre électronique d'un débit d'eau potable dans une conduite d'eau potable,
- transmission dudit débit mesuré à une unité de contrôle,
- actionnement par l'unité de contrôle d'une électrovanne disposée entre une source de CO2 et un module d'injection de CO2, ledit module d'injection étant disposé sur ladite conduite en aval du débitmètre et en amont d'un filtre mélangeur, ledit actionnement contrôlant :
   - une fréquence d'injection de CO2, indexée sur ledit débit mesuré, et
   - une durée d'injection de CO2,
- mesure du PH par une sonde électronique de mesure de PH disposée sur ladite conduite en aval dudit filtre mélangeur,
- transmission dudit PH mesuré à l'une unité de contrôle ; et
- modification, si besoin, de la fréquence d'injection de CO2 et/ou de la durée d'injection de CO2 en fonction du PH mesuré et d'une valeur de PH, dit PH cible, déterminée en fonction d'un PH de l'eau précédemment mesuré sans injection de CO2, dit PH initial.

### Description des figures et modes de réalisation

D'autres avantages et caractéristiques apparaîtront à l'examen de la description détaillée d'un mode de réalisation nullement limitatif, et des dessins annexés sur lesquels :
- la [FIG.1] est une représentation très schématique d'un exemple de réalisation non limitatif d'un dispositif selon l'invention ;
- la [FIG.2] est une représentation très schématique d'un exemple de réalisation non limitatif d'un module d'injection de CO2 selon l'invention ;
- la [FIG.3] est une représentation schématique et en coupe d'un exemple de réalisation non limitatif d'un filtre mélangeur selon l'invention; et
- la [FIG.4] est une représentation très schématique d'un exemple de réalisation non limitatif d'un dispositif selon l'invention.

Il est bien entendu que les modes de réalisation qui seront décrit dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs figures conservent la même référence.

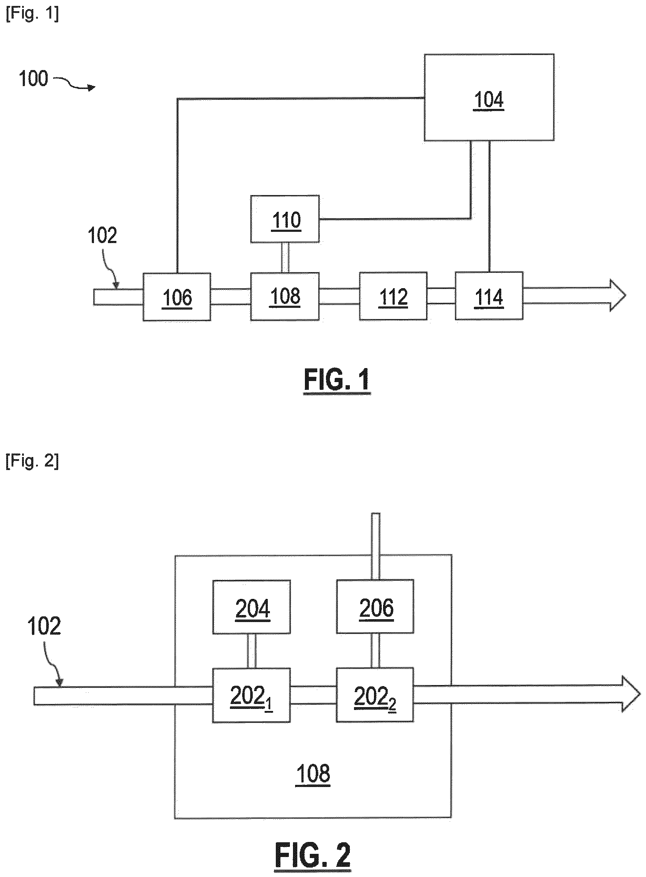

La [Fig.1] est une représentation très schématique d'un exemple de réalisation non limitatif d'un dispositif selon l'invention.

La [Fig.1] illustre de manière schématique, un dispositif 100 de traitement de calcaire présent dans de l'eau potable selon l'invention. Le dispositif 100 est disposée au niveau d'une conduite d'eau 102 schématiquement illustrée par une flèche dont le sens indique la direction du flux traversant ladite conduite 102.

Le dispositif 100 comprend une unité de contrôle 104.

De plus, le dispositif 100 comprend un débitmètre 106 disposée sur la conduite 102. Le débitmètre 106 permet de mesurer le débit d'eau dans la conduite 102 et de transmettre ledit débit mesuré à ladite unité de contrôle 104. Dans l'exemple illustré en [Fig.1], le débitmètre 106 est relié à l'unité de contrôle 104 pour permettre la transmission dudit débit mesurés. A titre d'exemple nullement limitatif, la fréquence d'acquisition du débitmètre 106 est supérieure à 200Hz. Selon une alternative de réalisation, le débitmètre peut être un débitmètre dit à impulsions, prévu pour envoyer à chaque fois qu'un volume prédéfinit traverse le débitmètre, par exemple un volume d'un litre.

Le dispositif 100 comprend en outre un module 108 d'injection de CO2 dans ladite conduite 102 d'eau disposé en aval du débitmètre 108.

De plus, le dispositif 100 comprend une électrovanne 110 disposée entre le module 108 d'injection et une source de CO2 (non illustrée).

La source de CO2 peut par exemple être une bouteille de CO2 (aussi connu sous le nom bonbonne de CO2) ou toute autre source permettant de délivrer du CO2 à un pression supérieure ou égale à 4 bars. Au moins un détendeur peut être disposé entre ladite source et ladite l'électrovanne de sorte à réduire la pression de CO2 en sortie de ladite source. A titre d'exemple nullement limitatif, la pression de CO2 peut être réduite par le détendeur à une pression comprise entre 3 et 6 bars. Alternativement ou en plus, dans un mode réalisation où la pression dynamique de l'eau dans la conduite en entrée du module d'injection est connue, la pression de CO2 peut être réduite par le détendeur de sorte à être supérieure de 1 bar à ladite pression statique.

Dans l'exemple illustré en [Fig.1], l'électrovanne 110 est distinct du module 108 d'injection. Alternativement, selon d'autres variantes de réalisation, l'électrovanne 110 peut être comprise dans ledit module 108 d'injection ou comprise dans l'unité de contrôle 104.

L'électrovanne 110 est reliée à l'unité de contrôle 104. Ainsi, l'unité de contrôle 104 est capable d'actionner l'électrovanne 110 de sorte à contrôler une durée d'injection de CO2. En effet, en contrôlant la durée entre l'envoi à l'électrovanne 110 d'un signal d'ouverture et signale de fermeture, l'unité de contrôle 104 est capable de contrôler la durée pendant laquelle l'électrovanne 110 est en position ouverte et donc de contrôler la durée pendant laquelle du CO2 est injecté dans la conduite 102.

De plus, l'unité de contrôle 104 est capable d'actionner l'électrovanne 110 de sorte à contrôler une fréquence d'injection de CO2 indexée sur le débit mesuré.

L'unité de contrôle 104 reçoit une mesure du débit provenant du débitmètre 106 disposé en amont du module d'injection 108 sur la conduite 102, l'unité est capable d'adapter la fréquence d'injection en fonction du débit mesuré. Ainsi, l'unité de contrôle 102 est capable de contrôler la fréquence d'injection de sorte à obtenir un nombre d'injections de CO2 par litre d'eau voulu.

En effet, par indexation de la fréquence d'injection sur le débit mesuré il est entendu que la fréquence d'injection (en nombre d'injections par secondes) est égale au débit mesuré (en litres par seconde) multiplié par un coefficient, dit coefficient d'injection (en nombre d'injections par litre). Ainsi, lorsqu'une fréquence d'injection est modifiée ou configurée de sorte à réaliser un nombre N d'injections de CO2 par litre, par exemple dix, le coefficient d'injection est égal à N, donc dix dans cet exemple. Si dans ce même exemple, le débit mesuré est de deux litres par secondes, la fréquence d'injection serait donc égale à vingt injections par seconde.

Indexer ainsi la fréquence d'injection sur le débit mesuré est particulièrement avantageux car cela permet d'injecter une quantité de CO2 proportionnel au volume d'eau à traiter.

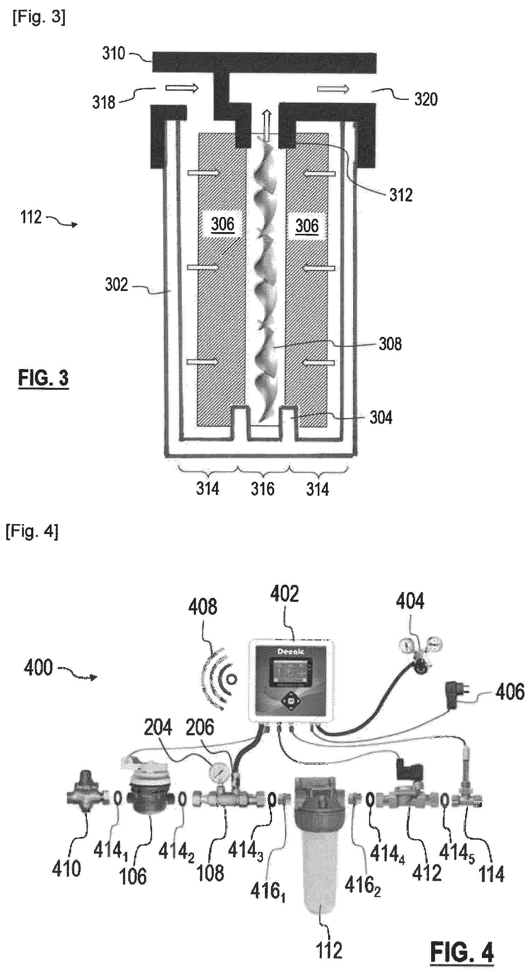

Le dispositif 100 comprend en outre un filtre à eau, dit filtre mélangeur 112 disposé en aval dudit module d'injection de CO2. Bien que non illustré en [Fig.1] le filtre mélangeur 112 comprenant au moins un média filtrant pour filtrer d'éventuelles particules présentes dans l'eau, et au moins un élément mélangeur pour améliorer la dilution de CO2 injecté dans l'eau. Un exemple de réalisation de filtre mélangeur 112 est décrit en plus de détails ci-après en relation avec la [Fig.3].

Le dispositif 100 comprend de plus une sonde 114 électronique de mesure de PH disposée en aval dudit filtre mélangeur 112 sur la conduite 102. Cette sonde 114 est reliée à l'unité de contrôle 104. Ainsi, la sonde 114 permet de mesurer le niveau de PH dans l'eau en aval du filtre mélangeur 112 et de transmettre le PH mesuré à l'unité de contrôle.

Le PH mesuré par la sonde 114 est représentatif du PH de l'eau circulant dans en aval du dispositif 100. En effet, l'utilisation d'un filtre mélangeur 112 en amont de la sonde 114 permet de mieux diluer le CO2 injecté dans l'eau. Ainsi, le CO2 dilué se transforme en acide carbonique et réduit le PH de l'eau avant d'atteindre la sonde 114.

Ainsi, l'unité de contrôle 112 est capable de modifier la fréquence d'injection et/ou la durée d'injection en fonction du PH mesuré par la sonde 114 et d'une valeur de PH souhaitée en aval du dispositif, dit PH cible. Ce PH cible est déterminée en fonction d'un PH de l'eau précédemment mesuré sans injection de CO2, dit PH initial.

Selon un mode de réalisation préférentiel, le PH initial est mesuré par la sonde 114 et transmis à l'unité de contrôle 112. Alternativement, le PH initial peut être mesuré par un utilisateur en amont de l'installation du dispositif 100. Ce PH initial peut alors être renseigné dans l'unité de contrôle.

Selon un mode de réalisation préférentiel, le PH cible est déterminé par l'unité de contrôle à partir du PH initial. Alternativement, un utilisateur peut déterminer le PH cible à partir du PH initial et renseigner le PH cible dans l'unité de contrôle.

La valeur du PH cible est par exemple inférieure de 0.4 à 0.6 à la valeur du PH initial, préférentiellement inférieur de 0.5.

A titre, d'exemples nullement limitatif, l'unité de contrôle 102 peut :
- augmenter la fréquence d'injection et/ou la durée d'injection de CO2 lorsque le PH mesuré est inférieure au PH cible,
- réduire la fréquence d'injection et/ou la durée d'injection de CO2 lorsque le PH mesuré est supérieur au PH cible.

Par ailleurs, l'unité de contrôle 102 peut être préconfigurée de sorte à faciliter le paramétrage du dispositif 100.

Une fréquence initiale peut être préconfigurée dans l'unité de contrôle de sorte à réduire le nombre d'itérations requises lors du paramétrage avant d'identifier la fréquence d'injection de CO2 optimale. A titre d'exemple nullement limitatif la fréquence initiale peut être préconfigurée de sorte à réaliser un nombre d'injection de CO2 par litre d'eau compris entre 8 et 12, préférentiellement égal à 10.

Alternativement ou en plus, une durée initiale d'injection peut être préconfigurée dans l'unité de contrôle de sorte à réduire le nombre d'itérations requises lors du paramétrage avant d'identifier la durée d'injection de CO2 optimale. A titre d'exemple nullement limitatif une durée initiale d'injection dont la valeur est comprise entre 6 et 110 millisecondes peut être préconfigurée dans l'unité de contrôle.

De plus, l'unité de contrôle 102 peut être préconfigurée de sorte à ne pouvoir modifier la durée d'injection et/ou la fréquence d'injection que dans une plage de valeur fonctionnelle.

A titre d'exemples nullement limitatifs :
- la durée d'injection est préconfigurée dans l'unité de contrôle comme modifiable entre 4 et 300 millisecondes, et/ou
- la fréquence d'injection est préconfiguré dans l'unité de contrôle comme modifiable de sorte à réaliser un nombre d'injection de CO2 par litre d'eau compris entre 5 et 15.

Par ailleurs, bien que dans l'exemple de réalisation illustré en [Fig.1], l'unité de contrôle 104 soit relier au débitmètre 106, à l'électrovanne 110 et à la sonde 114, d'autres modes de réalisation utilisant d'autres moyens de communications ou une pluralité de moyen de apparaîtrons évident à l'homme du métier.

Le dispositif 100 est ainsi capable de mettre en oeuvre un procédé selon l'invention. Ce procédé de traitement de calcaire présent dans de l'eau potable, comprenant au moins une itération des étapes suivante :
- mesure par un débitmètre 106 électronique d'un débit d'eau potable dans une conduite 102 d'eau potable,
- transmission dudit débit mesuré à une unité de contrôle 104,
- actionnement par l'unité de contrôle 104 d'une électrovanne 110 disposée entre une source de CO2 et un module d'injection 108 de CO2, ledit module d'injection 108 étant disposé sur ladite conduite 102 en aval du débitmètre 106 et en amont d'un filtre mélangeur 112, ledit actionnement contrôlant :
   - une fréquence d'injection de CO2, indexée sur ledit débit mesuré, et
   - une durée d'injection de CO2,
- mesure du PH par une sonde 114 électronique de mesure de PH disposée sur ladite conduite 102 en aval dudit filtre mélangeur 112,
- transmission dudit PH mesuré à l'une unité de contrôle 104; et
- modification, si besoin, de la fréquence d'injection de CO2 et/ou de la durée d'injection de CO2 en fonction du PH mesuré et d'une valeur de PH, dit PH cible, déterminée en fonction d'un PH de l'eau précédemment mesuré sans injection de CO2, dit PH initial.

La [FIG.2] est une représentation très schématique d'un exemple de réalisation non limitatif d'un module d'injection de CO2 selon l'invention.

Le module 108 d'injection illustré en [FIG.2] est disposé sur une conduite d'eau 102. Ce module comprend une première purge 202₁ disposée en amont d'une seconde purge 202₂. La première purge 202₁ est connectée à un manomètre 204.

La seconde purge 202₂ est reliée à un moyen anti-retour 206 Ce moyen anti-retour est prévu pour être relié à une source de CO2 via l'électrovanne (non illustrée en [FIG.2]) et pour permettre le passage du CO2 dans un premier sens et empêcher le passage de l'eau dans le sens inverse.

Le manomètre permet de connaitre la pression dynamique de l'eau dans la conduite à l'entrée du module 108 d'injection de CO2 et donc en amont de la deuxième purge, où le CO2 est injecté dans la conduite 102.

Selon un mode de réalisation ce manomètre peut permettre à un utilisateur d'un dispositif selon l'invention d'obtenir la pression en entré du module d'injection. Cela permet à l'utilisateur, lors de l'installation du dispositif, de paramétrer la pression de CO2 provenant de la source de CO2 de sorte qu'elle soit supérieure d'au moins un bar à pression dynamique de l'eau dans la conduite.

Selon une variante de réalisation, le moyen anti-retour 206 peut en outre être prévu de sorte à ne permettre le passage du CO2 uniquement lorsque la pression du CO2 est supérieure d'au moins un bar à la pression dynamique de l'eau dans la conduite 102.

Selon une autre variante de réalisation, le manomètre 206 peux être un manomètre électronique prévu pour transmettre la pression mesurée à l'unité de contrôle. Dans cette variante de réalisation l'unité de contrôle est capable de commander un détendeur électronique disposée sur la source de CO2. L'unité de contrôle peut ainsi de paramétrer la pression de CO2 provenant de la source de sorte qu'elle soit supérieure d'au moins un bar à pression dynamique de l'eau dans la conduite.

La [FIG.3] est une représentation schématique et en coupe d'un exemple de réalisation non limitatif d'un filtre mélangeur selon l'invention.

Le filtre mélangeur 112 comprend une cuve 302 sensiblement cylindrique. La cuve 302 comprend en son fond une lèvre 304 cylindrique centrée co-axialement dans la cuve 302.

Le filtre mélangeur 112 comprend en outre un média filtrant 306, ayant une forme de cylindre creux. Le média filtrant 306 est positionné co-axialement dans la cuve 302. Lorsque ce média filtrant 306 mis en place dans la cuve 302, la lèvre 304 viens s'insérer au moins partiellement dans une première extrémité du média filtrant 306.

Un élément mélangeur 308 est disposé co-axialement dans la cuve 302, à l'intérieur du centre creux cylindrique du média filtrant 306. Dans l'exemple de réalisation illustré en [Fig. 3], l'élément mélangeur est une hélice mélangeuse. L'hélice mélangeuse comprend six tronçons hélicoïdaux, chaque tronçon étant décalé du précédent tronçon d'un angle 90°.

Le filtre mélangeur 112 comprend en outre un couvercle 310 disposée sur la cuve 302.

Le couvercle 310 est prévue pour être disposée sur l'ouverture de la cuve 302 de sorte à couvrir celle-ci. Le couvercle 310 est en outre prévu pour être fixé sur la cuve 302, par exemple vissage.

Le couvercle 310 comprend en outre, sur une partie inférieure du couvercle 310 en regard de l'intérieur de la cuve 302 lorsque le couvercle est disposé sur la cuve 302, une lèvre 312 cylindrique. Cette lèvre 312 est prévue pour être positionnée co-axialement avec la cuve 302, lorsque le couvercle 310 est disposé sur la cuve 302.

Lorsque le couvercle 310 est mise en place sur la cuve 302, dans laquelle sont positionnés le média filtrant 306 et l'élément mélangeur 308, la lèvre 312 du couvercle 310 viens s'insérer au moins partiellement dans une seconde extrémité du média filtrant 306, opposée à la première extrémité.

Ainsi, le volume interne de la cuve 302 est divisé en deux parties par le média filtrant 306 conjointement avec les lèvres 304 et 312. Une première partie 314, dite périphérique, est comprise entre les parois interne de la cuve 302 et les externes du média filtrant 306. Une deuxième partie 316, dite centrale, est comprise entre les parois interne du média filtrant 306.

Le couvercle 310 comprend en outre une entrée 318, permettant de relier l'extérieur du filtre mélangeur à la partie périphérique 314 de la cuve 302. Cette entrée 318 est prévue pour être reliée au module d'injection d'un dispositif selon l'invention.

De plus, le couvercle 310 comprend une sortie 320, permettant de relier l'extérieur du filtre mélangeur à la partie central 316 de la cuve 302, par le centre de la lèvre 312 du couvercle 310. Cette sortie 320 est prévue pour être reliée à une sonde de mesure PH d'un dispositif selon l'invention.

Lors de la mise en œuvre d'un dispositif selon l'invention, un flux d'eau et de CO2 provenant du module d'injection entre dans le filtre mélangeur par l'entrée 318 et est dirigée vers la partie centrale 314 de la cuve 302.

L'eau et le CO2 sont ensuite forcés au travers du média filtrant 306 vers la partie centrale 316 de la cuve 302.

L'eau et le CO2 sont ensuite dirigés vers la sortie 320 du filtre mélangeur. Toutefois, la présence de l'élément mélangeur 308 rend le flux turbulent dans la partie centrale 316. Le CO2 est ainsi d'avantage mélangé dans l'eau ce qui améliore sa dissolution et donc sa transformation en acide carbonique.

Ainsi, le flux provenant du filtre mélangeur 112 ne comprend plus de CO2, ou une quantité négligeable de CO2, lorsqu'il atteint la sonde de mesure de PH.

Par conséquent, le filtre mélangeur 112 permet à une sonde de mesure PH d'un dispositif selon l'invention d'obtenir une mesure du PH fiable, reproductible et représentative du PH de l'eau circulant en aval du dispositif selon l'invention.

La [FIG.4] est une représentation par une vue en éclaté d'un exemple de réalisation non limitatif d'un dispositif selon l'invention.

Similairement au dispositif 100 décris en relation avec la [Fig.1], le dispositif 400 comprend une unité de contrôle 402, un débitmètre 106, un module d'injection 108, un filtre mélangeur 112 et une sonde 114 électronique de mesure de PH.

De plus, le débitmètre 106 et la sonde 114 sont chacun relié à l'unité de contrôle 402 pour transmettre le débit mesuré et le PH mesuré respectivement.

Le module d'injection 108, similairement au module d'injection 200 décrit en relation avec la [Fig.2] comprend un manomètre 204 et un moyen anti-retour 206.

Le dispositif 400 se diffère du dispositif 100 de la [Fig.1] en plusieurs points.

Tout d'abord l'électrovanne du dispositif 400 est comprise dans l'unité de contrôle 402. Ainsi, l'unité de contrôle 402 est reliée, via des tuyaux pneumatiques, d'une part au moyen anti-retour 206 du module d'injection 108, et d'autre part à un détendeur 404 prévu pour être monté sur une bouteille de CO2 non illustrée. A titre d'exemple nullement limitatif, la bouteille de CO2 pleine peu stocker du CO2 à une pression supérieure à 60 bars. Le détendeur 404 comprenant deux manomètres, un premier pour mesurer la pression dans la bouteille de CO2 et un deuxième pour mesurer la pression en sortie du détendeur 404.

Ainsi, le dispositif 400 est capable de mettre en œuvre le procédé de traitement de calcaire selon l'invention décrit précédemment en relation avec la [Fig.1].

De plus unité de contrôle 106 comprend un écran tactile permettant à l'unité de contrôle d'afficher des informations pertinentes pour un utilisateur. A titre d'exemples nullement limitatif ces informations peuvent être le débit mesuré, une consommation d'eau, un niveau estimé de CO2 consommé, la fréquence d'injection, la durée d'injection, le PH mesuré etc... Cet écran tactile peut en outre permettre à un utilisateur de d'interagir avec l'unité de contrôle 106, par exemple lors du paramétrage du dispositif 400. Bien évidemment, des variantes de réalisation de l'unité de contrôle avec un écran non tactiles et tout autre moyen d'interaction avec l'unité de contrôle, tel que par exemple des boutons physiques, sont possible.

L'unité de contrôle 106 comprend en outre un câble d'alimentation 406 prévu pour être branché à une prise.

De plus, l'unité contrôle 106 comprend un moyen de communication sans fils 408, schématiquement illustré par des ondes en [Fig.4]. Ce moyen de communication sans fils 408 peut être de tout type, par exemple Wi-Fi, LTE M, 3G, 4G, Bluetooth etc... Le moyen de télécommunication peut par exemple être utilisé pour envoyer des messages d'alertes à un utilisateur ou pour télécharger des mises à jour logiciel.

Par ailleurs, le dispositif 400 comprend un réducteur de pression 410 prévu pour être positionné en amont du débitmètre 106. Ainsi, le réducteur de pression 410 permet de réduire la pression de l'eau circulant en aval et garantit ainsi le bon fonctionnement du dispositif 400. Plus particulièrement cette réduction facilite l'injection de CO2 par le module d'injection 108. Il est toutefois important de noter qu'un tel réducteur n'est pas essentiel au bon fonctionnement d'un dispositif selon l'invention. En effet, il est possible de régler la pression du CO2 en sortie de la source grâce au détendeur 404 de sorte que celle-ci soit supérieure à la pression de l'eau. De plus, la pression de l'eau desservie par les réseaux de distribution est régularisée en ne dépasse généralement pas 3 bars.

Le dispositif 400 comprend en outre une électrovanne de coupure d'eau 412, disposée entre le filtre mélangeur 112 et la sonde 114. Cette vanne est reliée à l'unité de contrôle 402. Cela permet à l'unité de contrôle 402 de commander l'électrovanne de coupure d'eau 412.

L'unité de commande 402 est ainsi d'envoyer une commande de coupure d'eau à l'électrovanne 412 lorsqu'une fuite d'eau en aval du dispositif est identifiée, par exemple à partir de la valeur du débit mesuré dans le temps.

Il est de plus possible d'envoyer à distance une instruction de couper l'eau à l'unité de contrôle 402, équipée d'un moyen de communication sans fils 408, par l'exemple à l'aide d'un smartphone, d'une tablette numérique ou d'un ordinateur.

D'autres emplacements de l'électrovanne 424 sont possible et apparaitrons évident à l'homme du métier. A titre d'exemples nullement limitatif, l'électrovanne peut être disposée entre le réducteur de pression 410 et débitmètre 106, ou en aval de la sonde de la sonde 114.

Le dispositif 400 comprend en outre des joints 414₁ à 414₅ et des raccords 416₁ et 416₂.

Dans l'exemple de réalisation illustré en figure [Fig.4], le joint 414₁ est prévu pour être logé dans un connecteur femelle du réducteur de pression 410, ce connecteur femelle étant prévu pour accueillir un connecteur male d'entré du débitmètre 106. Le joint 414₂ est prévu pour être logé dans un connecteur femelle d'entrée du module d'injection 108, ce connecteur femelle étant prévu pour accueillir un connecteur male de sortie du débitmètre 106.

Le connecteur 416₁ est un connecteur male-male, une première extrémité de celui-ci est prévue pour être vissé dans l'entrée du filtre mélangeur 112. La deuxième extrémité est prévue pour être insérée dans un connecteur femelle de sortie du module d'injection 108 dans lequel est logé le joint 414₃.

Le connecteur 416₂ est un connecteur male-male, une première extrémité de celui-ci est prévue pour être vissé dans la sortie du filtre mélangeur 112. La deuxième extrémité est prévue pour être insérée dans un connecteur femelle d'entrée de l'électrovanne de coupure d'eau 412 dans lequel est logé le joint 414₄.

Le joint 414₅ est prévu pour être logé dans un connecteur femelle de sortie de l'électrovanne de coupure d'eau 412, ce connecteur femelle étant prévu pour accueillir un connecteur male d'entrée de la sonde 114.

D'autres moyens de connections apparaitrons évident à l'homme du métier. A titres d'exemples nullement limitatifs, les connections mâles et femelles peuvent être inversés, des moyens pour reliés différents éléments peuvent être utilisés telles que de la tuyauteries etc...

Bien entendu, l'invention n'est pas limitée aux exemples détaillés ci-dessus.

## Revendications

1. Dispositif (100;400) de traitement de calcaire présent dans de l'eau potable, comprenant :
- une unité de contrôle (104;402),
- un débitmètre (106;106) électronique pour mesurer un débit dans une conduite (102) d'eau potable et transmettre ledit débit mesuré à ladite unité de contrôle (104;402),
- un module d'injection (108;108) de CO2 dans ladite conduite d'eau en aval dudit débitmètre (106;106),
- une électrovanne (110) prévue pour être disposée entre ledit module d'injection (108;108) et une source de CO2, ladite électrovanne (110) étant actionnable par l'unité de contrôle (104;402) de sorte à contrôler :
• une fréquence d'injection de CO2, indexée sur ledit débit mesuré, et/ou
• une durée d'injection de CO2,
- un filtre à eau, dit filtre mélangeur (112;112;112), prévu pour être disposé en aval dudit module d'injection (108;108) de CO2 et comprenant :
• au moins un média filtrant pour filtrer d'éventuelles particules présentes dans l'eau, et
• au moins un élément mélangeur pour améliorer la dilution de CO2 injecté dans l'eau,
- une sonde (114;114) électronique de mesure de PH pour mesurer le PH de l'eau en aval dudit filtre mélangeur (112;112;112) et transmettre ladite mesure à l'unité de contrôle (104;402),
dans lequel, l'unité de contrôle (104;402) est prévue pour modifier ladite fréquence d'injection et/ou ladite durée d'injection en fonction dudit PH mesuré et d'une valeur de PH, dit PH cible, déterminée en fonction d'un PH de l'eau précédemment mesuré sans injection de CO2, dit PH initial.

2. Dispositif (100;400) selon la revendication 1, **caractérisé en ce que** la valeur du PH cible est inférieure de 0.4 à 0.6 à la valeur du PH initial, préférentiellement inférieur de 0.5.

3. Dispositif (100;400) selon l'une quelconque des revendications précédentes, **caractérisé en ce que** l'unité de contrôle (104;402) :
- augmente la fréquence d'injection et/ou la durée d'injection de CO2 lorsque le PH mesuré est inférieure audit PH cible ; et
- réduit la fréquence d'injection et/ou la durée d'injection de CO2 lorsque le PH mesuré est supérieur audit PH cible.

4. Dispositif (100;400) selon l'une quelconque des revendications précédentes, **caractérisé en ce qu'**une fréquence d'injection initiale est préconfigurée dans l'unité de contrôle (104;402), la fréquence initiale étant préconfigurée de sorte à réaliser un nombre d'injection de CO2 par litre d'eau compris entre 8 et 12, préférentiellement égal à 10.

5. Dispositif (100;400) selon l'une quelconque des revendications précédentes, **caractérisé en ce qu'**au moins une durée initiale d'injection est préconfigurée dans l'unité de contrôle (104;402), ladite durée initiale d'injection étant comprise entre 6 et 110 millisecondes.

6. Dispositif (100;400) selon la revendication précédente, **caractérisé en ce qu'**une pluralité de durées initiales d'injection, chacune associée à une valeur de PH distincte, sont préconfigurées dans l'unité de contrôle (104 ;402), dans lequel une desdites durées initiales d'injection est choisie par l'unité de contrôle (104 ;402) en fonction de la valeur de PH associée et de la valeur du PH initial.

7. Dispositif (100;400) selon l'une quelconque des revendications précédentes, **caractérisé en ce que** la fréquence d'injection est préconfiguré dans l'unité de contrôle (104;402) comme modifiable de sorte à réaliser un nombre d'injection de CO2 par litre d'eau compris entre 5 et 15.

8. Dispositif (100;400) selon l'une quelconque des revendications précédentes, **caractérisé en ce que** la durée d'injection est préconfigurée dans l'unité de contrôle (104;402) comme modifiable entre 4 et 300 millisecondes.

9. Dispositif (100;400) selon l'une quelconque des revendications précédentes, **caractérisé en ce que** le module d'injection (108;108) comprend un moyen anti-retour (206;206) pour permettre le passage du CO2 dans un premier sens et empêcher le passage de l'eau dans le sens inverse.

10. Dispositif (100;400) selon l'une quelconque des revendications précédentes, **caractérisé en ce qu'**au moins un élément mélangeur est une hélice mélangeuse (308) de forme hélicoïdale prévue pour être disposée dans un élément cylindrique du filtre mélangeur (112;112;112) traversé par l'eau potable.

11. Dispositif (100;400) selon la revendication précédente, **caractérisé en ce qu'**au moins un élément mélangeur est hélice mélangeuse (308) comprenant une pluralité de tronçons hélicoïdaux, chaque tronçon étant décalé du précédent tronçon d'un angle compris entre 45° et 135°, de préférence compris entre 80° et 100°.

12. Procédé de traitement de calcaire présent dans de l'eau potable, comprenant au moins une itération des étapes suivante :
- mesure par un débitmètre (106;106) électronique d'un débit d'eau potable dans une conduite (102) d'eau potable,
- transmission dudit débit mesuré à une unité de contrôle (104;402),
- actionnement par l'unité de contrôle (104;402) d'une électrovanne disposée entre une source de CO2 et un module d'injection (108;108) de CO2, ledit module d'injection (108;108) étant disposé sur ladite conduite (102) en aval du débitmètre (106;106) et en amont d'un filtre mélangeur(112;112), ledit actionnement contrôlant :
• une fréquence d'injection de CO2, indexée sur ledit débit mesuré, et
• une durée d'injection de CO2,
- mesure du PH par une sonde (114;114) électronique de mesure de PH disposée sur ladite conduite en aval dudit filtre mélangeur (112;112;112),
- transmission dudit PH mesuré à l'une unité de contrôle (104;402) ; et
- modification, si besoin, de la fréquence d'injection de CO2 et/ou de la durée d'injection de CO2 en fonction du PH mesuré et d'une valeur de PH, dit PH cible, déterminée en fonction d'un PH de l'eau précédemment mesuré sans injection de CO2, dit PH initial.
